# EUROPEAN PATENT SPECIFICATION

(11) **EP 3 590 182 B1**
(45) Date of publication and mention of the grant of the patent: **26.07.2023**
(21) Application number: 18715061.0
(22) Date of filing: 27.02.2018
(51) Int. Cl.: H02K 49/10

(54) **MAGNETIC COUPLING AND METHOD**
MAGNETISCHE KUPPLUNG UND VERFAHREN
COUPLAGE MAGNÉTIQUE ET PROCÉDÉ

(30) Priority: 03.03.2017 GB 201703452; 18.12.2017 GB 201721117; 05.01.2018 GB 201800156
(43) Date of publication of application: 08.01.2020
(73) Proprietor: Cleaner World Technologies Ltd, Yealand Redmayne, Lancashire LA5 9TA (GB)
(72) Inventor: LEWIS, Simon, Morecambe Lancashire LA4 5XN (GB)
(74) Representative: Derry, Paul Stefan
(86) International application number: PCT/GB2018/050494
(87) International publication number: WO 2018/158562

(56) References cited:
- WO-A1-2007/055421
- WO-A1-2016/184513
- DE-A1-102009 056 227
- FR-A1- 2 546 253
- GB-A- 549 590
- JP-A- 2005 253 292
- US-A- 3 814 962
- US-A1- 2004 041 479

## Description

Document JP 2005253292 A describes a permanent magnet (or electromagnet) that is disposed on the side faces of paired gears made of steel having a high magnetic permeability si that N-poles (or S-poles) are opposed to each other. A magnetic repulsive force is generated between the tooth surfaces that engage, which can result in a reduction in contact surface pressure or a non-contact state.

Document FR 2546253 A1 describes a device for magnetic coupling between two rotary driving and driven shafts, comprising two neighbouring transverse discs respectively fastened to the two driving and driven shafts and each carrying, at their periphery, a succession of magnets. This device is characterised in that the driving shaft and driven shaft are parallel to one another and spaced apart by a distance which is less than the sum of the radii of the two.

Document DE 102009056227 A1 describes a wheel with a set of teeth comprising a magnetic polarity. Power transmission is performed at the teeth by radial magnetic repulsion. Reduced radial deflection forces are transferred to a shaft bearing of an axis of rotation when reduced rotational power transmission is executed. The teeth are formed by permanent magnetic material or electromagnet and are provided with an enclosure in a form of mechanical gear teeth. An axis of a rotatable is parallel to an axis of a gear shaft of another set of teeth.

US 2004/0041479 A1 describes an apparatus for inducing drive that includes a primary and four secondary drive shafts. The primary and secondary shafts are fitted with magnets that are oriented such that when the primary shaft is rotated the secondary shafts are caused to rotate due to attractive or repulsive forces. The primary shaft is connected to and rotated by a rotational energy source such as a motor powered by electricity or a battery. Each secondary shaft is fitted with two annular magnetic discs that are oriented to vertically support the weight of the shaft above the alternating or generating device.

Document WO 2007/055421 A1 describes a device for transmitting rotation without contact. Such a device comprises a main rotor with permanent magnet units fixed to its outer circumference and an auxiliary rotor with second permanent magnet units fixed to its outer circumference at equal intervals. Each of the first and second permanent magnet units has a magnet body integrated so as to attract each other. When the auxiliary motor is rotated by a motor, the main rotor is rotated by magnetic force.

Document WO 2016/184513 A1 describes a transmission comprising a drive element for providing a rotational drive, an output element which is dependent on the rotational drive, a first coupling arrangement assigned to the drive element, and a second coupling arrangement assigned to the output element. The drive element and the output element are coupled to one another in a manner which transmits force contactlessly on account of a magnetic interaction of the coupling arrangements, resulting in the rotational drive movement being converted into the output movement.

Document GB 549590 A describes a magnetic gearing whereby rotary motion between shafts may be transmitted without friction or mechanical contact.

Document US 3814962 A describes a magnetic worn gear drive including a worm gear having a helical tooth of permanent magnet material. A worm wheel has a plurality of circumferentially spaced teeth of permanent magnet material. The teeth on the worm wheel interdigitate with the tooth of the worm gear. The teeth are magnetized so that like poles on the worm gear tooth and worm wheel teeth face one another. Rotation of the worm gear causes rotation of the worm wheel by magnetic repulsion.

The present invention relates to a magnetic coupling apparatus and to a method for creating such a coupling.

It is known that like magnetic poles repel, i.e. N ↔ N or S ↔ S, and, if the magnets are located at the circumferences of two essentially circular members, such that pairs of magnets interengage, rotation of one of the members will cause the other to rotate, according to basic gearing principles. An important aspect of this principle is that the engagement of the two members can result in a non-contact gear transmission. This is critical where risk of contamination from lubricants might occur or noise levels need to be minimised.

The engagement of the magnets may be by passing closely past each other (without actual inter-engagement); this allows the driving member to continue operating even if the driven member is prevented from turning, i.e. it protects the mechanism from damage.

The present invention is defined in the attached independent claims, to which reference should now be made. Further, preferred features may be found in the sub-claims appended thereto.

According to a first aspect of the present invention there is provided magnetic coupling apparatus, for transmitting drive from a driving member to a driven member, wherein the driving member has at least one first magnet and the driven member has one or more second magnets, and wherein the driving member and the driven member are arranged so that, as the driving member rotates, the at least one first magnet approaches one of the second magnets and thus exerts a force upon it which causes the driven member to rotate.

The first and second magnets are arranged in use to become apposed, but not touch one another, as the driven member rotates.

The poles of the first and second magnets are aligned to optimise the force.

The poles are aligned so that the force is repulsive. In a preferred arrangement there is a plurality of first magnets arranged on the driving member, and preferably a plurality of second magnets arranged on the driven member.

The magnets are preferably arranged on the driving member and the driven member so that as the driving member rotates a succession of first magnets is brought into apposition to a succession of second magnets. The first and second sets of magnets are arranged to remain in spaced circular loci as the driving member and driven member rotate.

The driving member may be arranged in use to be driven by a source of input power. The source of input power may comprise any of (but not limited to): electrical power, mechanical power. The driven member may be connected to an output device. The output device may comprise any of (but not limited to) : a pump, a generator, a gear.

The driving member may comprise first magnets arranged around a periphery of the driving member, preferably at spaced locations and more preferably at substantially equally spaced locations.

The driven member may comprise second magnets arranged around a periphery of the driven member, preferably at spaced locations and more preferably at substantially equally spaced locations.

The or each first magnets are arranged on the driving member so that their North-South axes are substantially parallel with an axis of rotation of the driving member. The second magnets are arranged on the driven member so that their North-South axes are substantially parallel with an axis of rotation of the driven member.

In a preferred arrangement the driving member comprises a shaft and a substantially planar body on which the magnets are mounted.

The driven member may comprise a shaft and a substantially planar body on which the magnets are mounted.

The planar body may comprise a substantially circular, more preferably disc-like or annular body.

Preferably the magnets are arranged substantially normally with respect to their respective substantially planar bodies.

In a preferred arrangement the planar body of the driving member and the planar body of the driven member lie in a substantially common plane.

According to a second aspect of the present invention there is provided a method according to claim 11.

The magnets are preferably arranged on the driving member and the driven member so that as the driving member rotates a succession of first magnets is brought into apposition to a succession of second magnets. The first and second sets of magnets are arranged to remain in spaced circular loci as the driving member and driven member rotate.

Preferably the method includes powering the driving member by a source of input power, which may comprise any of (but not limited to): electrical power, mechanical power.

Preferably the method includes connecting the driven member to an output device. The output device may comprise any of (but not limited to): a pump, a generator, a gear.

In accordance with a further aspect of the invention, there is provided a magnetic coupling apparatus comprising:
i) a source of input power;
ii) a driving member, rotationally coupled to the input power source and having a plurality of magnets fast therewith, said magnets being located at an appropriate point(s) on the driving member;
iii) a driven member, rotationally mounted and having a plurality of magnets fast therewith, said magnets being located at an appropriate point(s) on the driven member; and
iv) an output member, rotationally coupled or connected either directly or indirectly, with the driven member.

Driving and driven members are preferably aligned so that, when rotating, the magnets in one plurality will pass magnets in the other plurality in a manner in which both their North and/or South seeking poles essentially abut in close proximity, i.e. N-to-N and/or S-to-S. Preferably they do not touch each other so that each one of the plurality of magnets fast with the driving member provides in turn a repulsive force with one of the plurality of magnets fast with the driven member. Accordingly, the magnets on the driving member impart a succession of repulsive forces (pushes) to the magnets on the driven member, thus causing it to rotate in an essentially smooth manner. This provides a drive to the output member.

Preferably the mutual engagement of a driving magnet in the plurality of driving magnets has limited circumferential freedom of movement in its engagement with a driven magnet in the plurality of driven magnets. More preferably, the separation distance between said driving and driven magnets in a forward direction of rotation is less than the separation distance between said driving magnet and the next driven magnet in a reverse direction of rotation.

The source of input power may be electrical in nature.

Alternatively, or in addition, the source of input power may be mechanical in nature.

The magnets may be permanent magnets.

Alternatively, or in addition the magnets may be electromagnets.

The electromagnets may be energised for only a predetermined part of the angular rotation of the driving and/or driven member.

Each magnet of the pluralities of magnets fast with both driving and driven members may be aligned normally to the common plane of rotation of both driving and driven members.

Each magnet of the pluralities of magnets fast with both driving and driven members may be aligned normally to the plane of rotation of the respective driving or driven members and these planes of rotation may be parallel to but offset from each other.

The magnets of the plurality on the driving member may abut in close proximity, but not touch the magnets of the plurality on the driven member in a manner in which the axes of each abutting pair of magnets are essentially parallel to each other.

The driving and driven members may be essentially planar and circular and/or may have circular parts and the magnets may be located normally to the plane of rotation and at/near the circumferences.

Each magnet of the plurality of magnets fast with both driving and driven members may be mounted so that the same pole, e.g. the North-seeking pole, is at the end of the magnet in contact with either the driving or driven member and hence the other pole, i.e. the South seeking pole, is at the distal end of the magnet remote from the common plane of rotation.

The apparatus may comprise a gearing transmission.

Alternatively, or additionally, the apparatus may comprise a power generator and/or a power convertor.

The output member may include a rotational drive means. Alternatively, or in addition, the output member may comprise an electrical power generator.

In a preferred arrangement there is a plurality of output members.

The coupling between the power source and the driving member may be either via an axial connection or may be via the driving member's circumference.

The coupling between the driven member and the output member may be via an axial connection or via the driven member's circumference.

The mutual engagement of the driving and driven members may be by passing in close proximity without direct inter-engagement.

The passing in close proximity may allow for a degree of slippage between the driving and driven members.

The mutual engagement of the driving and driven members preferably provides a non-contact gear ratio or speed change.

The numbers of magnets in either/each plurality and/or relative diameters of the driving and driven members may determine the rotational gear ratio and/or speed change of the apparatus.

The spacing of the magnets in either/both pluralities and/or relative diameters of the driving and driven members may determine the torque transmission capabilities of the apparatus. The spacing of the magnets in either/both pluralities may permit rotational self-starting of the driven member when power is supplied to the driving member.

In accordance with another aspect, the invention includes a method of providing a magnetic coupling comprising the steps of:
i) providing a source of power;
ii) providing a driving member, rotationally coupled to the power source and having a plurality of magnets fast therewith, said magnets being located at an appropriate point(s) on the driving member;
iii) providing a driven member, rotationally mounted and having a plurality of magnets fast therewith, said magnets being located at an appropriate point(s) on the driven member; and
iv) providing an output member, rotationally coupled or connected either directly or indirectly, with the driven member.

Driving and driven members are preferably aligned so that, when rotating, the magnets in one plurality will pass magnets in the other plurality in a manner in which both their North and/or South seeking poles essentially abut in close proximity, i.e. N-to-N and/or S-to-S. Preferably they do not touch each other so that each one of the plurality of magnets fast with the driving member provides in turn a repulsive force with one of the plurality of magnets fast with the driven member. Accordingly the magnets on the driving member impart a succession of repulsive forces (pushes) to the magnets on the driven member, thus causing it to rotate in an essentially smooth manner. This provides a drive to the output member.

Preferably the mutual engagement of a driving magnet in the plurality of driving magnets has limited circumferential freedom of movement in its engagement with a driven magnet in the plurality of driven magnets. More preferably the separation distance between said driving and driven magnets in a forward direction of rotation is less than the separation distance between said driving magnet and the next driven magnet in a reverse direction of rotation.

The method may comprise a method of providing a gearing transmission.

Alternatively, or additionally, the method may comprise a method of power generation and/or of power conversion.

Where the magnets pass in close proximity but do not interengage, the driven member may be caused to rotate before power is supplied to the power source.

The driving and driven members may automatically synchronise their rotational speeds once both are rotating.

The driven member may synchronise at the same, or at a different, rotational speed to that of the driving member according to the number of magnets in each of the pluralities and the initial speed to which the driven member is caused to rotate.

Providing power to the driving member may be arranged to cause the driven member to commence rotation and synchronise itself with the driving member. Accordingly, the apparatus may be self-starting.

The one or more electromagnets may be energised for only a predetermined rotational solid angle of the driving and/or driven members corresponding to the close-proximity abutting of each pair of magnets.

In a preferred arrangement, a magnet on the rotatable driving member engages with, but does not contact, a magnet on the rotatable driven member. The engagement may involve a degree of circumferential freedom of movement so that the separation distance between a magnet on the driving member and a magnet on the driven member in the forward sense of rotation may be less than that between said magnet on the driving member and the following magnet on the driven member in the reverse sense of rotation.

Both driving and driven members are preferably planar and preferably essentially circular, and/or have circular circumferential parts, with a plurality of permanent magnets arranged spaced uniformly around their circumferences or circumferential parts. The two members may be arranged to rotate in a common plane. The magnets are arranged in the substantially the same sense and substantially parallel to each other so that when a magnet in the one plurality approaches a magnet in the other plurality, the two North seeking poles are adjacent and the two South seeking poles are also adjacent, thus causing a doubly repulsive force to be generated.

The form of mutual engagement of the magnets on the driving and driven members is via passing close to each other but not touching.

If the driving member is caused to rotate, the passage of each magnet in its plurality will give a repulsive 'kick' to one of the plurality of magnets on the driven member causing it to move away. As the magnets in each plurality are spaced apart, driving and driven magnets will approach each other consecutively and undergo sequential repulsive kicks so that the driven member will continue to rotate until the two members turn synchronously. Where driving and driven members do not interengage but pass in close proximity, the driven member may be started rotating before power is supplied to the driving member. The driven member may be used as an output, driving an item of equipment either via an axial connection or via a further circumferential repulsive magnetic drive, such as just described. An advantageous feature is the non-contact nature of the magnetic drive. This may allow the apparatus to be used to transmit drive and/or power through an isolating barrier.

In this specification, the term embodiment is used to denote implementations that are covered by the claims and the term example is used to denote implementations which are not covered by the claims but which may be useful in understanding the invention.

Preferred embodiments of the present invention and examples useful in understanding the invention will now be described, by way of example only, with reference to the accompanying drawings in which:
Figure 1 is a diagrammatic plan view of a first example of an apparatus;
Figure 2 is a projected side elevation of the example apparatus of Figure 1;
Figure 3 is a copy of Figure 1 showing the driving engagement of the magnets in elliptical area A;
Figure 4 is an enlargement of the elliptical area A, shown in Figure 3;
Figure 5 is a diagrammatic, plan view of a variation of the example apparatus shown in Figure 1 with an additional power take-off;
Figure 6 is a diagrammatic plan view of a second example of an apparatus;
Figure 7 is a diagrammatic side elevation of the example apparatus shown in Figure 6;
Figure 8 is a diagrammatic plan view of a third embodiment of the apparatus of the invention;
Figure 9 is a diagrammatic side elevation of the apparatus shown in Figure 8;
Figure 10 is a diagrammatic plan view of a fourth embodiment of the apparatus of the invention;
Figure 11 is a diagrammatic side elevation of the apparatus shown in Figure 10;
Figure 12 is a diagrammatic, plan view of a sixth embodiment of the apparatus of the invention;
Figure 13 is a diagrammatic, side elevation of the apparatus shown in Figure 12;
Figure 14 is a diagrammatic, plan view of a seventh embodiment of the apparatus of the invention; and
Figure 15 is a diagrammatic, side elevation of the apparatus shown in Figure 14;

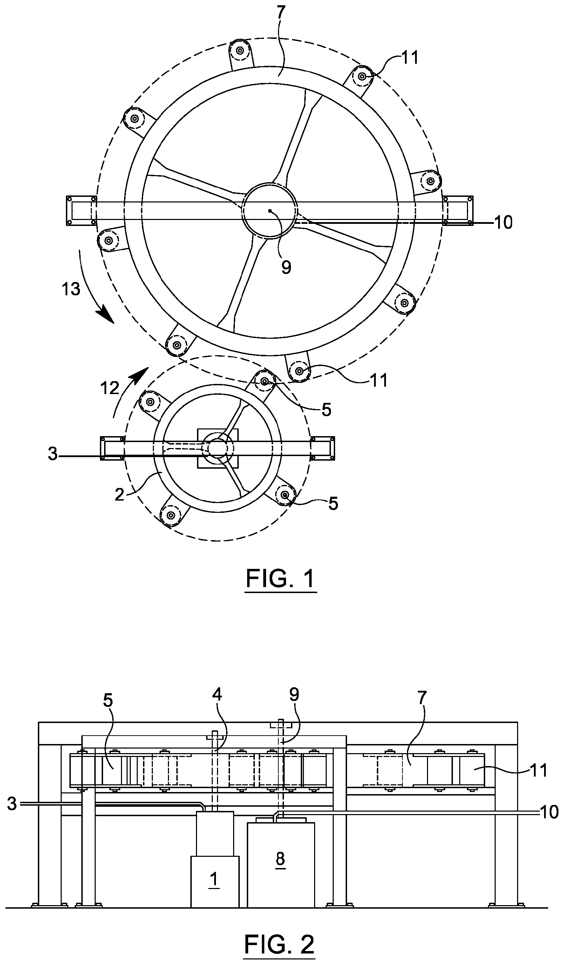

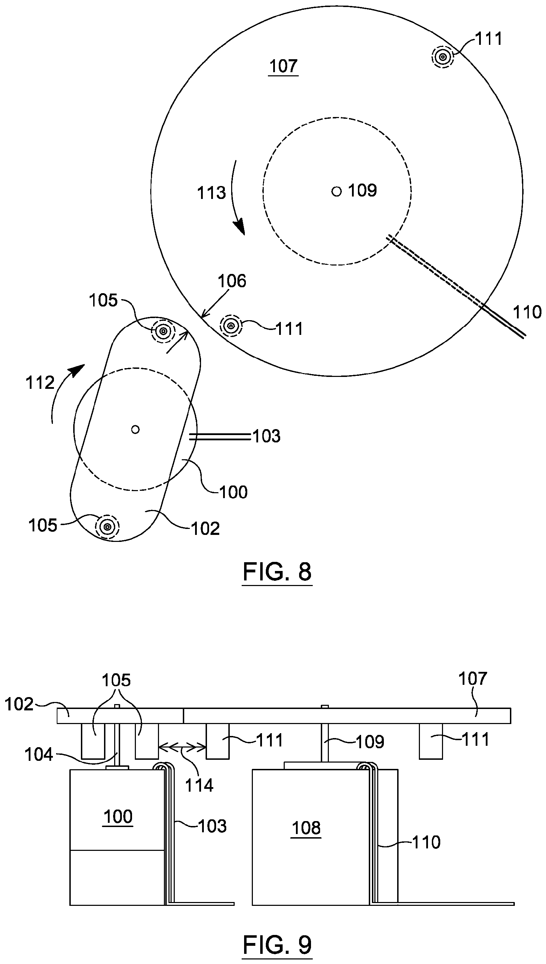

In Figs. 1-7 in the following description, like reference numerals are used for like components in different Figures and/or for different components fulfilling identical functions. In Figs. 8-15, the same reference numerals are used but are increased by 100.

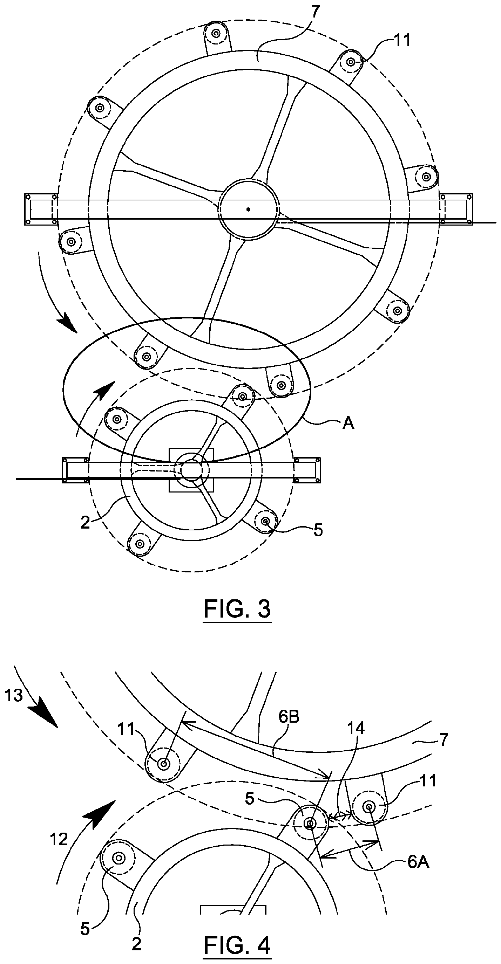

Figs. 1 and 2 show a basic principle. Power is supplied 3 to motor 1, which drives member 2 rotationally 12. Mounted on driving member 2 are cylindrical bar magnets 5. Member 2 rotates 12 close to, but does not contact, driven member 7 (as shown) and a magnet 5 engages with a magnet 11 located at the circumferences of members 2 and 7 respectively. The driving member and driven member are broadly planar, more preferably circular, disk-like or annular bodies. All magnets 5 and 11 are mounted normally so that (for example) their N poles are close to members 2 and 7, i.e. at the upper ends of Fig. 2, and thus their S poles are at their distal ends. As shown (Fig. 2), members 2 and 7 are coplanar and thus magnets 5 and 11 are parallel to each other and approach with the two N poles adjacent and the two S poles adjacent so that a maximum repulsive force 14 (Fig. 4) is generated causing driven member 7 to rotate 13 away from each magnet 5. (The repulsive force is represented by double headed arrow 14 (Fig. 4).)

When motor 1 is energised, driving member 2 will rotate and bring a magnet 5 towards a magnet 11, which will cause driven member 7 to turn. As member 2 reaches operating speed, the repeated repulsive 'kicks' 14 from magnets 5 to magnets 11 will synchronise the rotations 12 and 13; as member 2 carries four magnets 5 and member 7 has eight magnets 11, member 7 will rotate at half the speed of member 2. Member 7 drives an item 8, e.g. a pump, or a generator - thereby generating power - via shaft 9.

The gearing ratio between driving 2 and driven 7 members (Fig. 1) will depend on the relative numbers of magnets 5 and 11 respectively; typical ratios may be 2:1, 1:1 or 1:2, etc. in the Fig. 1 embodiment. As shown, the diameter of member 7 is greater than that of member 2 so the torque transmitted to shaft 9 will be greater than that in shaft 4.

Fig. 3 is a copy of Fig. 1 but with the area of the interaction of magnets 5 and 11 indicated by ellipse A. Fig. 4 is an enlargement of area of ellipse A. As shown, the separation distance 6A between magnets 5 and 11 in the forward direction of motion (12, 13) is much smaller than the separation distance 6B between magnet 5 and the following magnet 11 (i.e. in the reverse sense of rotation). The attractive or repulsive force between two magnets is essentially inversely proportion to the square of the separation distance. Thus, the forward force F_{A} is essentially proportional to 1/6A² and the reverse force F_{B} is proportional to 1/6B². As an example, to indicate the difference between F_{A} and F_{B}, one may scale off Fig. 4, where 6A is 18mm and 6B is 47mm. Thus F_{A}/F_{B} = (47/18)² = 6.818, i.e. F_{A} is nearly 7 times stronger than F_{B}. Hence, the vast majority of the net repulsive force 14, i.e. F_{A} - F_{B}, is directed towards driving the forward (13) rotation of member 7. The relative distances 6A and 6B will depend on the power being transmitted through the gearing 2 and 7 and the speeds of rotation 12 and 13. Higher rotational speeds will result in more repulsive kicks per unit time and hence a smoother transmission as the net angular momentum in the rotating members 2, 7 increases.

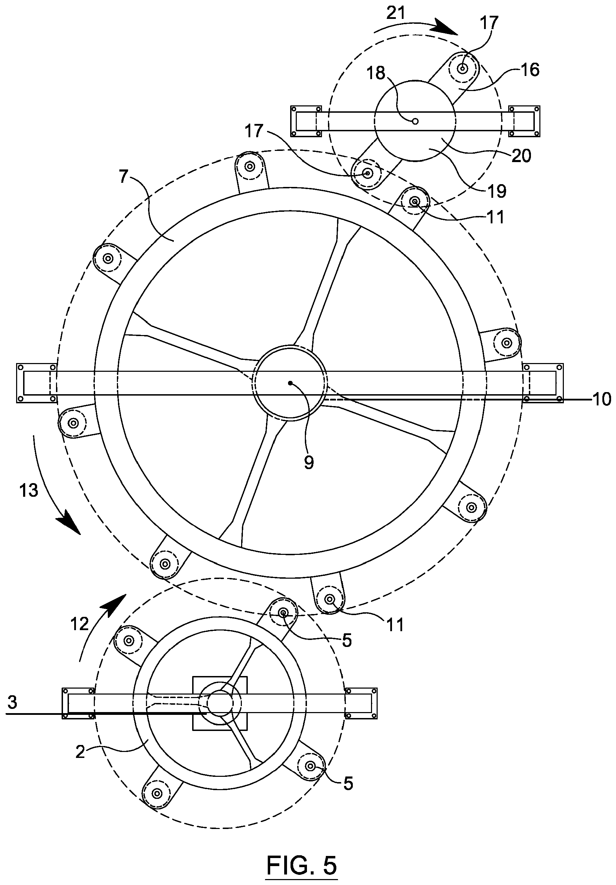

Though an electrical motor 1 is shown (Fig. 2) as the power source, diesel engines or air motors, etc. are equally applicable. Similarly, the output 8 could drive any appropriate item, e.g. a pump, generator or item of robotic equipment, etc. Fig. 5 shows how the arrangement in Fig. 1 may be used to drive a further rotary output. Here driven magnets 11 become the driver, engaging with magnets 17 on member 19, causing rotation 21 about axis 18. The output 19 may be a rotary device (not shown), or a further power output 20. Though an axial input drive 4 (Fig. 1) is taught, a circumferential input drive (not shown but similar to members 17-21) is equally possible.

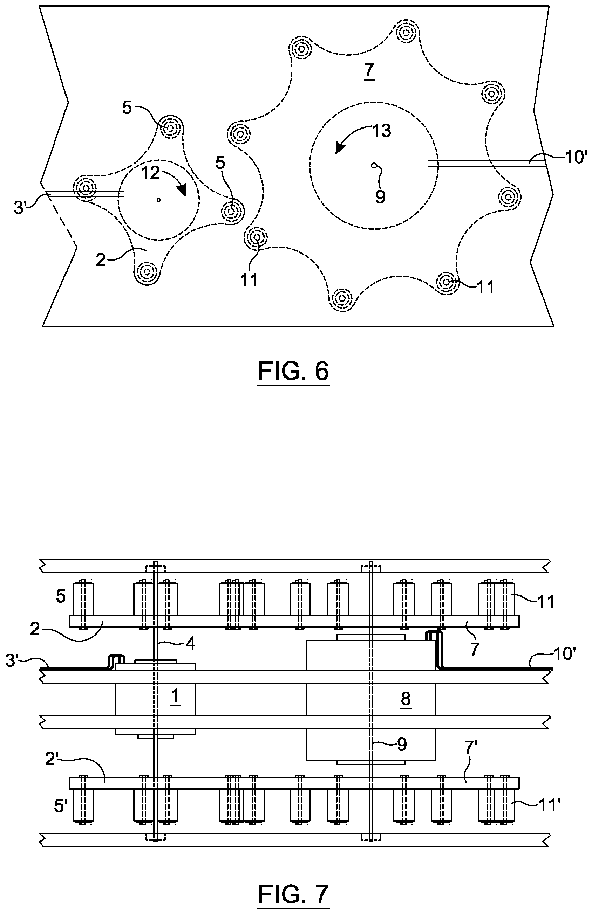

Figs. 6 and 7 show a second variation of the basic principle in which driving 2 and driven 7 members, with their magnets 5 and 11, are doubled up and shown as 2' and 7', and their magnets 5' and 11', respectively. This arrangement should increase the power transmitting capability of the gearing.

Figs. 8 and 9 show the principle of the invention where the magnets 105 and 111 pass close to each other without touching, as opposed to inter-engaging (Figs. 1-7). As before power is supplied 103 to motor 100, which drives member 102 rotationally 112. This was an early trial of the principle with only two magnets 105 and 111 respectively on driving 102 and driven 107 members. Member 102 rotates 112 close to, but clear of, driven member 107, as shown 106, and a magnet 105 engages with a magnet 111 located close to the circumference of member 107. As before, all magnets 105 and 111 are mounted normally so that (for example) their N poles are close to members 102 and 107 and thus their S poles are at their distal ends.

As shown (Fig. 9), members 102 and 107 are coplanar and thus magnets 105 and 111 are parallel to each other and approach with the two N poles adjacent and the two S poles adjacent so that a maximum repulsive force 114 (Fig. 9) is generated causing driven member 107 to rotate 113 away from each magnet 105. (The repulsive force is represented by double headed arrow 114.) If member 107 is rotating when power 103 is supplied to motor 100, the two rotations 112 and 113 will synchronise and each magnet 105 will approach 106 and administer a repulsive 'kick'' 114 to a magnet 111 as they pass. Member 107 drives pump 108 via shaft 109 but may equally drive a generator to produce electrical power.

An advantage of this `close passing' arrangement is that slippage can occur between driving 102 and driven 107 members, e.g. if the load on the driven member 107 becomes excessive. This will protect motor 100 from damage due to being stalled.

As both driving 102 and driven 107 members (Fig. 8) respectively carry only two magnets 105 and 111, each will rotate 112, 113 at the same speed though in opposite senses. Depending on the initial speed of rotation of driven wheel 107 before power is supplied to motor 100, the ratio of rotational speeds may be 2:1, 1:1 or 1:2, etc. in the Fig. 8 representation. As shown, the diameter of member 107 is greater than that of member 102 so the torque transmitted to shaft 109 will be greater than that in shaft 104.

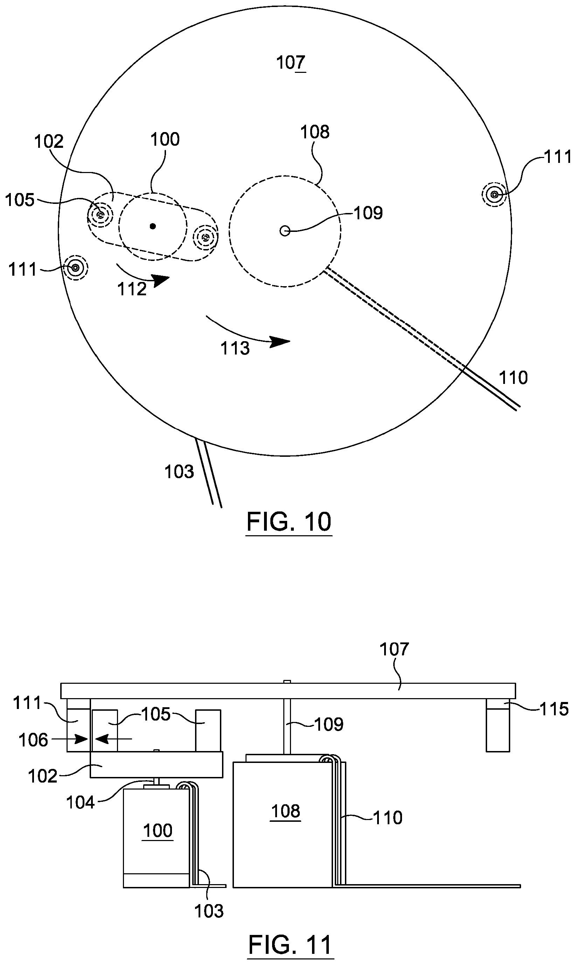

Figs. 10 and 11 show a variation of the arrangement of Figs. 8 and 9 in which driving member 102 is located parallel to, but below, the plane of the driven member 107. Spacers 115 maintain the close 106, but non-contact, abutting alignment of pluralities of magnets 105 and 111. As shown, magnets are mounted normally on members 102 and 107 respectively, again with the N and S poles directly abutting. This arrangement is more compact than that shown in Figs. 8 and 9 but the principle of operation is the same and the same reference numerals are used.

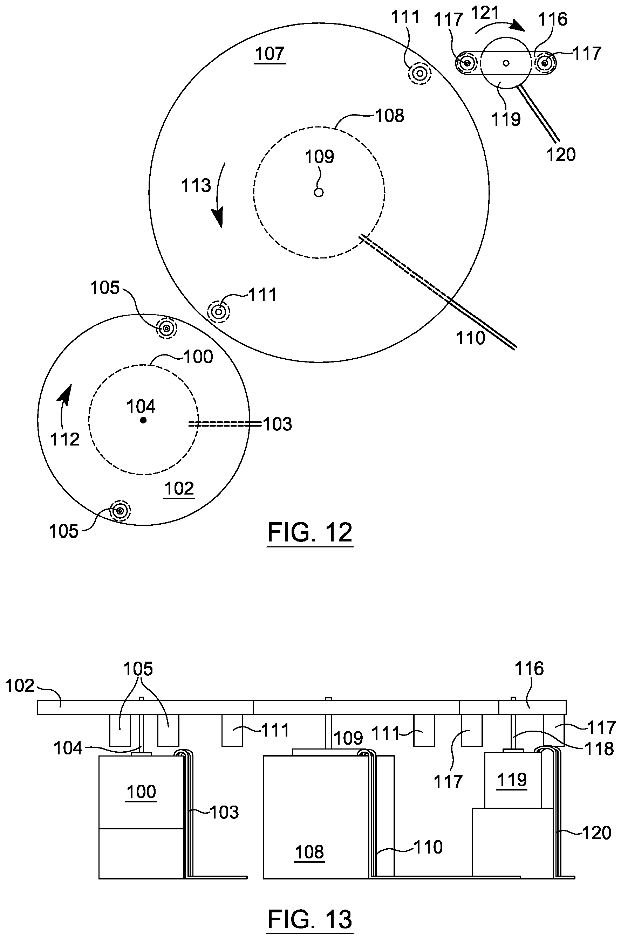

Figs. 12 and 13 show a further variation of the principle of the invention, but with a second power take off via member 116, driven by the interaction of pluralities of magnets 111 and 117, to axle 118 and a robotic item 119 (alternatively a generator) and output 120. As before, a single input 103 is used but provides two different outputs 109 and 119. All three members 102, 107 and 116 are coplanar.

Embodiments of the invention may be adapted, as required, by changing the relative diameters of members 102, 107 and 116 and numbers of magnets in each plurality. A plurality of second takes off 116-120 may be provided, as required; in this way the apparatus of the invention could simultaneously drive a number of different robotic systems, e.g. on a space craft. In Fig. 12, a two-stage power take off is taught and has been achieved in practice. However, motor 100 has to be powerful enough to provide the input force to drive the combination of the two magnetic repulsions 105-111 and 111-117 to produce useful outputs 109, 119.

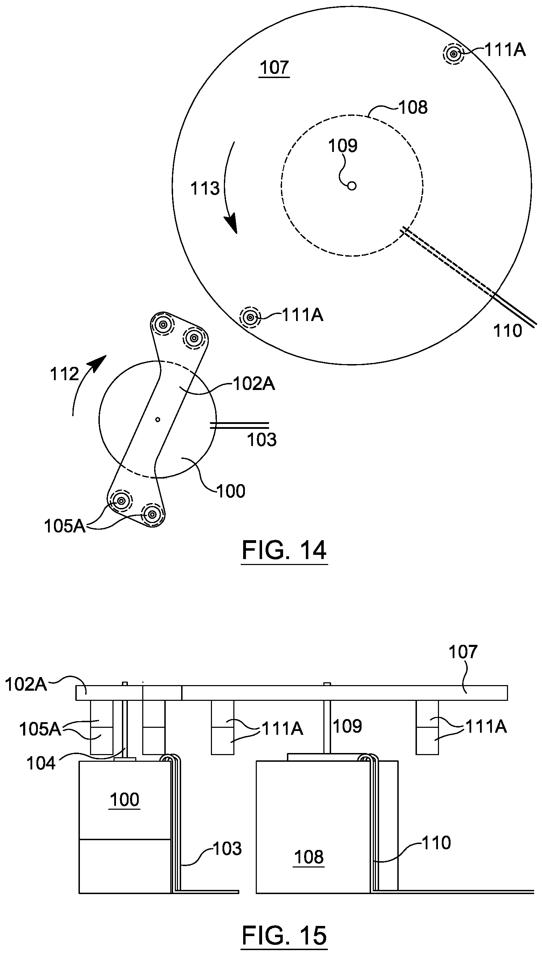

In Figs. 8-13, the pluralities have shown only two driving 105 and two driven 111 magnets; this has been to teach the principle of the invention in a clear logical way. One method of increasing the transmitted power is shown in Figs. 14 and 15, where the plurality of driving magnets 105A is used in pairs in a specially modified member 102A. Here, the pairs of magnets 105A will give magnet 111A a 'double kick' as each passes i.e. increasing the torque transmission. Additionally (Fig. 15), each magnet 105A and 111A is doubled up. Here the repulsive force, as magnets 105A and 111A pass, is potentially greater than that in the Figs. 8-13 representations.

With the arrangements shown in Figs. 8-15, it may occasionally happen that driven member 107 will not begin to rotate when driving member 102 is started. Under these circumstances, if driven member 107 is turning 113 before motor 101 is started, members 102 and 107 will automatically synchronise.

It is known that energy may be converted from one form to another. For example, a mass at a high point will have potential energy (mgh, where m is the mass, g is the acceleration due to gravity and h is the height) and, if it is allowed to roll down a hill, it will convert a part of this into kinetic energy (½mv², where v is the velocity). During the conversion, part of the potential energy will be lost due to friction and air resistance.

In a similar way, if two like magnetic poles are brought towards each other a repulsive force is generated between them. Defining this force precisely can be complicated due to the physical size and shape of the magnets but it may be approximated to an inverse square relationship, i.e. F = KM₁M₂/d², where F is the force (attractive or repulsive), K is a constant, M₁ and M₂ are the strengths of the two magnets and d is the separation distance. From this equation, it will be noted that the force increases rapidly as the separation distance decreases. This property may be used to convert a part of the magnetic potential energy into another form of energy.

The input power source and the repulsive forces between permanent magnets in the pluralities of magnets combine to produce the power in the output member.

When operated as described, some of the magnetic potential energy will be converted into the output energy, i.e. either rotational kinetic or electrical energy.

In the apparatus shown in Fig. 2, input 3 and output 10 electrical power was measured and independently verified. The output power is a function of the product of the number of magnets on the driven member 7 and its speed of rotation 13. The greater the number of magnets 11 on member 7, the smoother will be its rotation 13. Additionally, more magnets will increase the mass and hence the momentum of the member 7 and so give a more uniform power output 10. The description above has been written on the basis of permanent, essentially bar, magnets and, while magnets, including rare earth elements, are very powerful, the invention is equally applicable to electromagnets. In this case, commutators (not shown) would be provided coaxially with some/all of axles 4, 9, 18, 104, 109 & 118 and power to energise the electromagnets, i.e. the equivalents to 5, 11, 17, 105, 111 &117 would be supplied for only the appropriate proximity, solid, rotational angles of members 2, 7, 16, 102, 107 & 116.

Electromagnets may have a marginal advantage over permanent magnets in that the magnetism may not be energised until the rotation 12, 13 (Figs. 1-7) and 112, 113 (Figs. 8-15) has reached the point of closest proximity of magnets 5 and 11, thus eliminating the small reverse 'kick' (FB, 6B {Fig. 4}) as magnets approach prior to the strong forward 'kick' (FA, 6A) at and after closest proximity as they move away from each other. Combinations of bar magnets and electromagnets are equally possible on the same, or different, driving and/or driven members.

The skilled person will understand the principle of the invention and its many practical applications, such as gear transmission, power generation or D.C. voltage conversion, all falling within the scope of the invention. One important aspect is the non-contact nature of the power transmission. Lubrication of geared systems is a problem in space as the lubricants tend both to evaporate and migrate over surfaces away from the contact areas. Thus, a non-contact means of mechanical power transmission will have advantages in satellites, etc. and other robotic equipment, e.g. as used in nuclear decommissioning. It may also be useful where drive and/or power is to be transmitted through an isolating barrier.

## Claims

1. A magnetic coupling apparatus, for transmitting drive from a driving member (102) to a driven member (107), wherein the driving member (102) has at least one first magnet (105) and the driven member (107) has one or more second magnets (111), wherein the at least one first magnet (105) is arranged on the driving member (102) so that its North-South axis is substantially parallel with an axis of rotation of the driving member, wherein the one or more second magnets (111) are arranged on the driven member (107) so that their North-South axes are substantially parallel with an axis of rotation of the driven member (107), wherein the at least one first magnet (105) and the one or more second magnets (111) are arranged in substantially the same sense and substantially parallel to each other so that when a magnet of the at least one first magnet (105) approaches a magnet in the one or more second magnets (111), the two North seeking poles are adjacent and the two South seeking poles are also adjacent thus causing a doubly repulsive force to be generated as the driving member (102) rotates (112) which causes the driven member (107) to rotate (112), wherein the at least one first magnet (105) and the one or more second magnets (111) are arranged to remain in spaced circular loci as the driving member (102) and the driven member (107) rotate (112, 113).

2. Apparatus according to any of the preceding claims, wherein there is a plurality of first magnets (105) arranged on the driving member.

3. Apparatus according to claim 2, wherein the magnets are arranged on the driving member (102) and the driven member (107) so that as the driving member (102) rotates (112) a succession of first magnets (105) is brought into apposition to a succession of second magnets (111).

4. Apparatus according to any of the preceding claims, wherein the driving member (102) is arranged in use to be driven by a source of input power (100), and wherein the source of input power comprises electrical power or mechanical power.

5. Apparatus according to any of the preceding claims, wherein the driven member (107) is connected to an output device (108), and wherein the output device comprises any of a pump, a generator, or a gear.

6. Apparatus according to any of the preceding claims, wherein the driving member (102) comprises first magnets (105) arranged around a periphery of the driving member (102) at spaced locations, and wherein the driven member (107) comprises second magnets (111) arranged around a periphery of the driven member (107) at spaced locations.

7. Apparatus according to any of the preceding claims, wherein the driving member (102) comprises a shaft (104) and a substantially planar body on which the magnets are mounted.

8. Apparatus according to any of the preceding claims, wherein the driven member (107) comprises a shaft (109) and a substantially planar body on which the magnets are mounted.

9. Apparatus according to Claim 7 or 8, wherein at least one of the driving member (102) or the driven member (107) comprises a shaft and a substantially planar body on which the respective magnets are mounted and wherein the planar body comprises a disc-like or annular body.

10. Apparatus according to Claims 7 and 8, wherein both the driving member (102) and the driven member (107) comprise a shaft and a substantially planar body on which the respective magnets are mounted and wherein the planar body of the driving member (102) and the planar body of the driven member (107) lie in a substantially common plane.

11. A method of making a magnetic coupling between a driving member (102) and a driven member (107), the driving member (102) having at least one first magnet (105) and the driven member (107) having one or more second magnets (111), wherein the at least one first magnet (105) is arranged on the driving member (102) so that its North-South axis is substantially parallel with an axis of rotation of the driving member, wherein the one or more second magnets (111) are arranged on the driven member (107) so that their North-South axes are substantially parallel with an axis of rotation of the driven member (107), wherein the at least one first magnet (105) and the one or more second magnets (111) are arranged in substantially the same sense and substantially parallel to each other so that when a magnet of the at least one first magnet (105) approaches a magnet in the one or more second magnets (111), the two North seeking poles are adjacent and the two South facing poles are also adjacent thus causing a doubly repulsive force to be generated as the driving member (102) rotates (112) which causes the driven member (107) to rotate (112), wherein the method comprises arranging the at least one first magnet (105) and the one or more second magnets (111) to remain in spaced circular loci as the driving member (102) and the driven member (107) rotate (113).

## Patentansprüche

1. Magnetische Kupplungsvorrichtung zur Antriebsübertragung von einem Antriebselement (102) auf ein angetriebenes Element (107), wobei das Antriebselement (102) mindestens einen ersten Magneten (105) aufweist und das angetriebene Element (107) einen oder mehrere zweite Magnete (111) aufweist, wobei der mindestens eine erste Magnet (105) auf dem Antriebselement (102) angeordnet ist, so dass seine Nord-Süd-Achse im Wesentlichen parallel zu einer Drehachse des Antriebselements ist, wobei der eine oder mehrere zweite Magnete (111) auf dem angetriebenen Element (107) angeordnet sind, so dass ihre Nord-Süd-Achsen im Wesentlichen parallel zu einer Drehachse des angetriebenen Elements (107) sind, wobei der mindestens eine erste Magnet (105) und der eine oder mehrere zweite Magnete (111) im Wesentlichen gleichsinnig und im Wesentlichen parallel zueinander angeordnet sind, so dass, wenn sich ein Magnet des mindestens einen ersten Magneten (105) einem Magneten in dem einen oder mehreren zweiten Magneten (111) nähert, die beiden nordsuchenden Pole aneinandergrenzen und die beiden südsuchenden Pole ebenfalls aneinandergrenzen, wodurch bewirkt wird, dass eine doppelt abstoßende Kraft erzeugt wird, während sich das Antriebselement (102) dreht (112), was bewirkt, dass sich das angetriebene Element (107) dreht (112), wobei der mindestens eine erste Magnet (105) und der eine oder mehrere zweite Magnete (111) so angeordnet sind, dass sie in beabstandeten kreisförmigen Orten verbleiben, während sich das Antriebselement (102) und das angetriebene Element (107) drehen (112, 113).

2. Vorrichtung nach einem der vorhergehenden Ansprüche, wobei es eine Vielzahl von ersten Magneten (105) gibt, die auf dem Antriebselement angeordnet sind.

3. Vorrichtung nach Anspruch 2, wobei die Magnete auf dem Antriebselement (102) und dem angetriebenen Element (107) angeordnet sind, so dass, während sich das Antriebselement (102) dreht (112), eine Folge von ersten Magneten (105) in Apposition zu einer Folge von zweiten Magneten (111) gebracht wird.

4. Vorrichtung nach einem der vorhergehenden Ansprüche, wobei das Antriebselement (102) im Gebrauch so angeordnet ist, dass es von einer Eingangsleistungsquelle (100) angetrieben wird, und wobei die Eingangsleistungsquelle elektrische Leistung oder mechanische Leistung umfasst.

5. Vorrichtung nach einem der vorhergehenden Ansprüche, wobei das angetriebene Element (107) mit einem Ausgangsgerät (108) verbunden ist und wobei das Ausgangsgerät beliebig eine Pumpe, einen Generator oder ein Zahnrad umfasst.

6. Vorrichtung nach einem der vorhergehenden Ansprüche, wobei das Antriebselement (102) erste Magnete (105) umfasst, die um einen Umfang des Antriebselements (102) an beabstandeten Stellen angeordnet sind, und wobei das angetriebene Element (107) zweite Magnete (111) umfasst, die um einen Umfang des angetriebenen Elements (107) an beabstandeten Stellen angeordnet sind.

7. Vorrichtung nach einem der vorhergehenden Ansprüche, wobei das Antriebselement (102) eine Welle (104) und einen im Wesentlichen planaren Körper, worauf die Magnete montiert sind, umfasst.

8. Vorrichtung nach einem der vorhergehenden Ansprüche, wobei das angetriebene Element (107) eine Welle (109) und einen im Wesentlichen planaren Körper, worauf die Magnete montiert sind, umfasst.

9. Vorrichtung nach Anspruch 7 oder 8, wobei zumindest eines des Antriebselements (102) oder des angetriebenen Elements (107) eine Welle und einen im Wesentlichen planaren Körper, worauf die jeweiligen Magnete montiert sind, umfasst und wobei der planare Körper einen scheibenartigen oder ringförmigen Körper umfasst.

10. Vorrichtung nach Anspruch 7 und 8, wobei sowohl das Antriebselement (102) als auch das angetriebene Element (107) eine Welle und einen im Wesentlichen planaren Körper, worauf die jeweiligen Magnete montiert sind, umfassen und wobei der planare Körper des Antriebselements (102) und der planare Körper des angetriebenen Elements (107) in einer im wesentlichen gemeinsamen Ebene liegen.

11. Verfahren zum Herstellen einer magnetischen Kupplung zwischen einem Antriebselement (102) und einem angetriebenen Element (107), wobei das Antriebselement (102) mindestens einen ersten Magneten (105) aufweist und das angetriebene Element (107) einen oder mehrere zweite Magnete (111) aufweist, wobei der mindestens eine erste Magnet (105) auf dem Antriebselement (102) angeordnet ist, so dass seine Nord-Süd-Achse im Wesentlichen parallel zu einer Drehachse des Antriebselements ist, wobei der eine oder mehrere zweite Magnete (111) auf dem angetriebenen Element (107) angeordnet sind, so dass ihre Nord-Süd-Achsen im Wesentlichen parallel zu einer Drehachse des angetriebenen Elements (107) sind, wobei der mindestens eine erste Magnet (105) und der eine oder mehrere zweite Magnete (111) im Wesentlichen gleichsinnig und im Wesentlichen parallel zueinander angeordnet sind, so dass, wenn sich ein Magnet des mindestens einen ersten Magneten (105) einem Magneten in dem einen oder mehreren zweiten Magneten (111) nähert, die beiden nordsuchenden Pole aneinandergrenzen und die beiden südsuchenden Pole ebenfalls aneinandergrenzen, wodurch bewirkt wird, dass eine doppelt abstoßende Kraft erzeugt wird, während sich das Antriebselement (102) dreht (112), was bewirkt, dass sich das angetriebene Element (107) dreht (112), wobei das Verfahren das Anordnen des mindestens einen ersten Magneten (105) und des einen oder mehrerer zweiter Magnete (111) umfasst, so dass sie auf beabstandeten kreisförmigen Orten verbleiben, während sich das Antriebselement (102) und das angetriebene Element (107) drehen (113).

## Revendications

1. Appareil d'accouplement magnétique, pour transmettre un entraînement depuis un élément d'entraînement (102) à un élément entraîné (107), dans lequel l'élément d'entraînement (102) a au moins un premier aimant (105) et l'élément entraîné (107) a un ou plusieurs seconds aimants (111), dans lequel l'au moins un premier aimant (105) est agencé sur l'élément d'entraînement (102) de sorte que son axe Nord-Sud soit sensiblement parallèle à un axe de rotation de l'élément d'entraînement, dans lequel l'un ou plusieurs seconds aimants (111) sont agencés sur l'élément entraîné (107) de sorte que leurs axes Nord-Sud soient sensiblement parallèles à un axe de rotation de l'élément entraîné (107), dans lequel l'au moins un premier aimant (105) et l'un ou plusieurs seconds aimants (111) sont agencés sensiblement dans le même sens et sensiblement parallèles les uns aux autres de sorte que lorsqu'un aimant de l'au moins un premier aimant (105) s'approche d'un aimant dans l'un ou plusieurs seconds aimants (111), les deux pôles pointant le Nord soient adjacents et les deux pôles pointant le Sud soient également adjacents, provoquant ainsi la génération d'une force doublement répulsive tandis l'élément d'entraînement (102) tourne (112), ce qui entraîne la rotation (112) de l'élément entraîné (107), dans lequel l'au moins un premier aimant (105) et l'un ou plusieurs seconds aimants (111) sont agencés pour rester dans des lieux circulaires espacés tandis l'élément d'entraînement (102) et l'élément entraîné (107) tournent (112, 113).

2. Appareil selon l'une quelconque des revendications précédentes, dans lequel il y a une pluralité de premiers aimants (105) agencés sur l'élément d'entraînement.

3. Appareil selon la revendication 2,
dans lequel les aimants sont agencés sur l'élément d'entraînement (102) et l'élément entraîné (107) de sorte que tandis que l'élément d'entraînement (102) tourne (112), une succession de premiers aimants (105) est amenée en apposition à une succession de seconds aimants (111).

4. Appareil selon l'une quelconque des revendications précédentes, dans lequel l'élément d'entraînement (102) est agencé en utilisation pour être entraîné par une source de puissance d'entrée (100), et dans lequel la source de puissance d'entrée comprend une puissance électrique ou une puissance mécanique.

5. Appareil selon l'une quelconque des revendications précédentes, dans lequel l'élément entraîné (107) est connecté à un dispositif de sortie (108), et dans lequel le dispositif de sortie comprend l'un quelconque d'une pompe, d'un générateur ou d'un engrenage.

6. Appareil selon l'une quelconque des revendications précédentes, dans lequel l'élément d'entraînement (102) comprend des premiers aimants (105) agencés autour d'une périphérie de l'élément d'entraînement (102) à des emplacements espacés, et dans lequel
l'élément entraîné (107) comprend des seconds aimants (111) agencés autour d'une périphérie de l'élément entraîné (107) à des emplacements espacés.

7. Appareil selon l'une quelconque des revendications précédentes, dans lequel l'élément d'entraînement (102) comprend un arbre (104) et un corps sensiblement plan sur lequel les aimants sont montés.

8. Appareil selon l'une quelconque des revendications précédentes, dans lequel l'élément entraîné (107) comprend un arbre (109) et un corps sensiblement plan sur lequel les aimants sont montés.

9. Appareil selon la revendication 7 ou 8,
dans lequel au moins l'un parmi l'élément d'entraînement (102) ou l'élément entraîné (107) comprend un arbre et un corps sensiblement plan sur lequel les aimants respectifs sont montés et dans lequel le corps plan comprend un corps en forme de disque ou annulaire.

10. Appareil selon la revendication 7 et 8,
dans lequel à la fois l'élément d'entraînement (102) et l'élément entraîné (107) comprennent un arbre et un corps sensiblement plan sur lequel les aimants respectifs sont montés et dans lequel le corps plan de l'élément d'entraînement (102) et le corps plan de l'élément entraîné (107) se trouvent dans un plan sensiblement commun.

11. Procédé de réalisation d'un accouplement magnétique entre un élément d'entraînement (102) et un élément entraîné (107), l'élément d'entraînement (102) ayant au moins un premier aimant (105) et l'élément entraîné (107) ayant un ou plusieurs seconds aimants (111), dans lequel l'au moins un premier aimant (105) est agencé sur l'élément d'entraînement (102) de sorte que son axe Nord-Sud soit sensiblement parallèle à un axe de rotation de l'élément d'entraînement, dans lequel l'un ou plusieurs seconds aimants (111) sont agencés sur l'élément entraîné (107) de sorte que leurs axes Nord-Sud soient sensiblement parallèles à un axe de rotation de l'élément entraîné (107), dans lequel l'au moins un premier aimant (105) et l'un ou plusieurs seconds aimants (111) sont agencés sensiblement dans le même sens et sensiblement parallèles les uns aux autres de sorte que lorsqu'un aimant de l'au moins un premier aimant (105) s'approche d'un aimant dans l'un ou plusieurs seconds aimants (111), les deux pôles pointant le Nord soient adjacents et les deux pôles pointant le sud soient également adjacents, provoquant ainsi la génération d'une force doublement répulsive tandis que l'élément d'entraînement (102) tourne (112) ce qui entraîne la rotation (112) de l'élément entraîné (107), dans lequel le procédé comprend l'agencement de l'au moins un premier aimant (105) et de l'un ou plusieurs seconds aimants (111) pour rester dans des lieux circulaires espacés tandis que l'élément d'entraînement (102) et l'élément entraîné (107) tournent (113).
